# EUROPEAN PATENT APPLICATION

(11) **EP 2 028 841 A2**
(43) Date of publication of application: **25.02.2009**
(21) Application number: 08162629.3
(22) Date of filing: 19.08.2008
(51) Int. Cl.: H04N 5/232, H04N 5/247, H04N 7/18

(54) **Camera control method, camera control device, camera control program, and camera system**

(30) Priority: 21.08.2007 JP 2007215174
(71) Applicant: Sony Corporation, Tokyo (JP)
(72) Inventor: Nagayasu, Masafumi, TOKYO (JP)
(74) Representative: Thévenet, Jean-Bruno

(57) **Abstract**

A camera control method includes the steps of performing at least one of a panning operation, a tilting operation, and a zoom-in operation using a first camera (cam-1) of at least two cameras (cam-1, ..., cam-n), and performing at least one of a panning operation, a tilting operation, and a zoom-out operation using a second camera (cam-2) of the at least two cameras (cam-1, ..., cam-n) so that a portion of a blind spot or an entire blind spot generated due to at least one of the panning operation, the tilting operation, and the zoom-in operation performed using the first camera (cam-1) is included in a region captured using the second camera (cam-2).

## Description

### CROSS REFERENCES TO RELATED APPLICATIONS

The present invention contains subject matter related to Japanese Patent Application JP 2007-215174 filed in the Japanese Patent Office on August 21, 2007.

### BACKGROUND OF THE INVENTION

### 1. Field of the Invention

The present invention relates to camera control methods, camera control devices, and camera systems, and particularly relates to a technique employed in a security system using a monitoring camera, for example.

### 2. Description of the Related Art

In general, in security systems, specific regions are monitored using a plurality of monitoring cameras for crime prevention. Angles and fields of view of the monitoring cameras are controlled so that the monitoring cameras shoot respective assigned regions. Furthermore, when a suspicious individual is found using the cameras, the cameras are controlled to zoom in the suspicious individual for detailed observation.

Japanese Unexamined Patent Application Publication No. 2003-259337 discloses a monitoring system for monitoring a large region using an appropriate number of cameras.

### SUMMARY OF THE INVENTION

It is assumed that a certain region (hereinafter referred to as a "monitoring region") is monitored using a single camera. In this case, when an unusual object is detected in the monitoring region, detailed information on the unusual object is collected by controlling the camera to perform a panning operation, a tilting operation, and a zoom-in operation so that a position of the unusual object comes to a center of a region which is currently monitored using the camera. In this case, blind spots are generated in the region which was monitored before the zoom-in operation is performed due to the zoom-in operation.

Accordingly, in order to prevent the blind spots from being generated due to the zoom-in operation, for example, measures described below using a plurality of cameras may be taken.
(1) One of the plurality of cameras is used to obtain images in the entire region which has been monitored, and the other remaining cameras are used to collect the detailed information on the unusual object.
(2) One of the plurality of cameras is used to collect the detailed information on the unusual object, and half of the remaining cameras are used to monitor half of the region and the other remaining cameras are used to monitor the other half of the region.

In this case, there arises a problem in that a region which is to be monitored is determined by an angle of view of the camera or angles of views of the cameras which are used to obtain images of the entire region. Furthermore, since one of the plurality of cameras is used to obtain images of the entire region or used to collect the detailed information of the unusual object, the camera is not efficiently used at a time of a normal situation which occupies majority of operation time of the camera. That is, all the cameras included in the monitoring system are not necessarily effectively used.

Accordingly, it is desirable to utilize a plurality of cameras and reduce blind spots in a monitoring region.

According to an embodiment of the present invention, there are provided a camera control method, a camera control device, a camera control program, and a camera system including at least two cameras in which when a first camera of the at least two cameras performs at least one of a panning operation, a tilting operation, and a zoom-in operation, a second camera of the at least two cameras performs at least one of a panning operation, a tilting operation, and a zoom-out operation so that a portion of a blind spot or an entire blind spot generated due to at least one of the panning operation, the tilting operation, and the zoom-in operation performed using the first camera is included in a region captured using the second camera.

The cameras are automatically controlled so that a blind spot is not generated due to a panning operation, a tilting operation, or a zoom-in operation by merely determining physical arrangement of the cameras as initial setting. Furthermore, since initial states are maintained, the user may return current states of the cameras to the initial states.

Since a concept of a shared monitoring region is introduced, all the cameras in the system are used to monitor respective monitoring regions under a normal condition and monitor only a region in which the user intend to prevent generation of the blind spot under an unusual condition. Furthermore, the monitoring region is larger than a maximum image size to be transmitted from one of the cameras. Since a camera tour is automatically generated, tuning of tour setting performed by the user taking the blind spot into consideration for each camera may be eliminated.

### BRIEF DESCRIPTION OF THE DRAWINGS

Figs. 1A and 1B are diagrams schematically illustrating regions which are captured using two monitoring cameras according to an embodiment of the present invention;
Fig. 2 is a block diagram illustrating a system configuration according to the embodiment of the present invention;
Fig. 3 is a diagram illustrating an example of a screen displayed when an image display application is operated according to the embodiment of the present invention;
Fig. 4 is a diagram illustrating a maximum display region according to the embodiment of the present invention;
Fig. 5 is a diagram illustrating image display regions of initial states according to the embodiment of the present invention;
Fig. 6 is a diagram illustrating layout of the image display regions of practical use according to the embodiment of the present invention;
Fig. 7 is a diagram illustrating layout of the image display regions in a layout window according to the embodiment of the present invention;
Fig. 8 is a diagram illustrating layout of maximum image display regions according to the embodiment of the present invention;
Fig. 9 is a diagram illustrating the maximum image display regions in the layout window according to the embodiment of the present invention;
Fig. 10 is a diagram illustrating a maximum monitoring region in the layout window according to the embodiment of the present invention;
Fig. 11 is a diagram illustrating shared monitoring regions in the layout window according to the embodiment of the present invention;
Fig. 12 is a diagram illustrating the image display regions when a camera is controlled according to the embodiment of the present invention;
Fig. 13 is a diagram illustrating the image display regions at a time of a camera control operation according to the embodiment of the present invention;
Fig. 14 is a flowchart illustrating the camera control operation according to the embodiment of the present invention;
Fig. 15 is a flowchart illustrating a camera tour control operation according to the embodiment of the present invention; and
Fig. 16 is a diagram illustrating a shared monitoring region according to the embodiment of the present invention.

### DESCRIPTION OF THE PREFERRED EMBODIMENTS

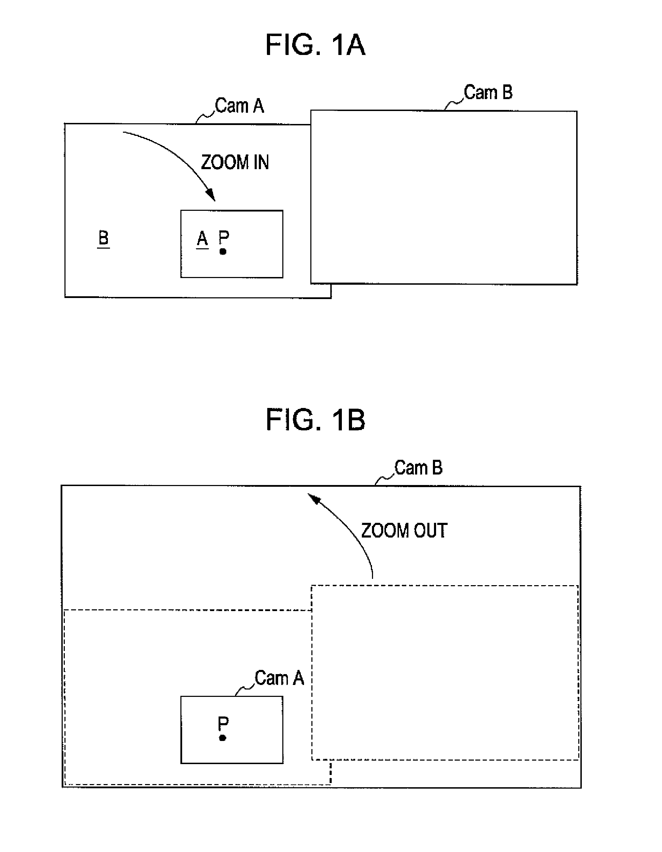

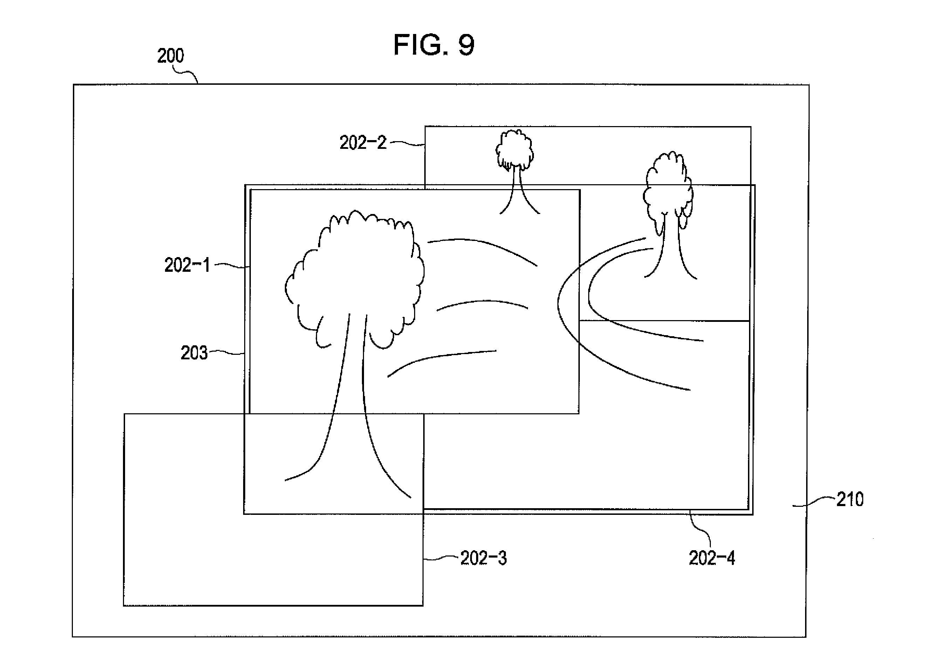

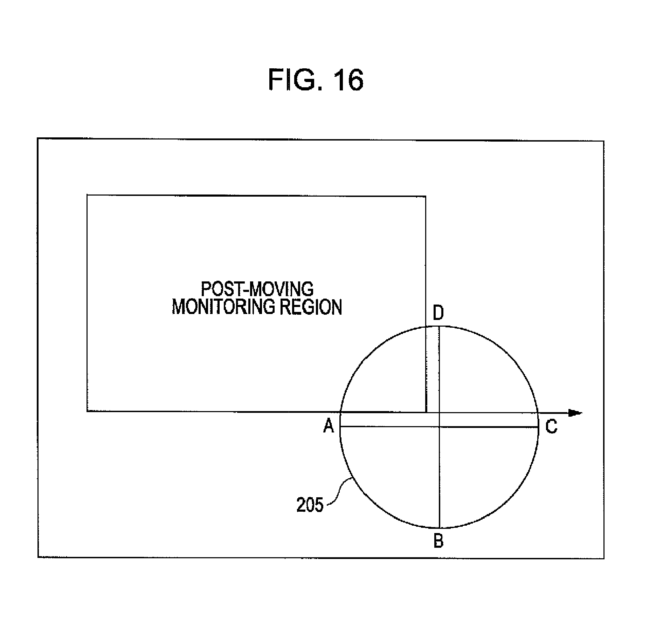

An embodiment of the present invention will be described with reference to Figs. 1 to 16. First, outline of this embodiment will be described. Assuming that a plurality of cameras are used in this embodiment, when one of the plurality of cameras performs a zoom-in operation, regions out of a field of view of the camera due to the zoom-in operation are supported by the other cameras.

Specifically, at least two monitoring cameras are used in this embodiment of the present invention. Figs. 1A and 1B are diagrams schematically illustrating regions which are captured using two monitoring cameras CamA and CamB. For example, assuming that the monitoring camera CamA detects an unusual situation such as intrusion of a suspicious individual, the monitoring camera CamA performs a zoom-in operation so that a region including a point P is enlarged as shown in Fig. 1A.

In this case, although a region A corresponding to the region including the point P is included in a field of view of the monitoring camera CamA, a region B is not included in the field of view of the monitoring camera CamA due to the zoom-in operation. Therefore, the region B is determined to be a blind spot. That is, a blind spot is generated in accordance with the operation of the monitoring camera.

In order to avoid the generation of the blind spot, the monitoring camera CamB which is arranged adjacent to the monitoring camera CamA performs a zoom-out operation so that a field of view of the monitoring camera CamB includes the field of view of the monitoring camera CamA obtained before the zoom-in operation. Accordingly, the region B which is the blind spot generated due to the zoom-in operation performed using the monitoring camera CamA is captured, and generation of a blind spot is avoided.

This embodiment will be described in more detail. First, an entire configuration of a system will be described, and then, the camera control method described above will be described in detail.

### System Configuration

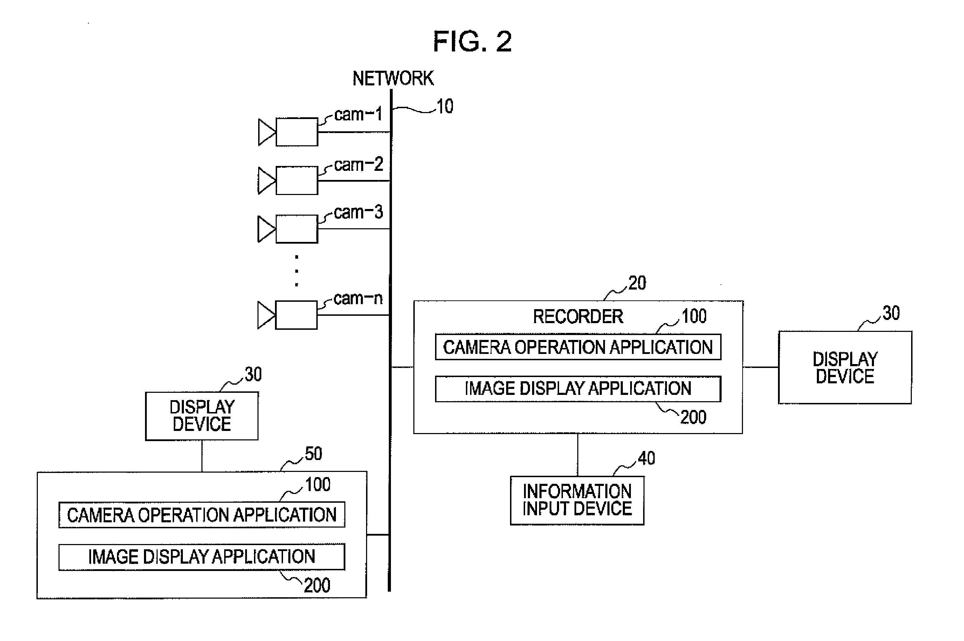

Fig. 2 shows a configuration of a system according to this embodiment. As shown in Fig. 2, n cameras Cam-1 to Cam-n (n is an integer) are connected to a network 10. Images captured using the cameras are transmitted through the network 10 to a recorder 20 which performs monitoring, recording, and distribution of the images through the network 10. The recorder 20 further performs setting operations and control operations on the cameras Cam-1 to Cam-n. That is, the recorder 20 includes applications used by a user to perform the setting operations and the control operations.

Note that the recorder 20 includes at least two applications, i.e., a camera operation application 100 and an image display application 200. User interfaces for the applications are displayed in a display device 30.

The camera operation application 100 and the image display application 200 are stored in a storage device incorporated in the recorder 20 and constitute a control unit. Alternatively, the camera operation application 100 and the image display application 200 may operate in an external device 50 connectable to the network 10. When being included in the recorder 20, the applications obtain images and camera control instructions from a memory included in the recorder 20, whereas when being included in the external device 50, the applications obtain the images and the camera control instructions through network delivery from the recorder 20. The obtained images are displayed in the display device 30. Configuration of Image Display Application

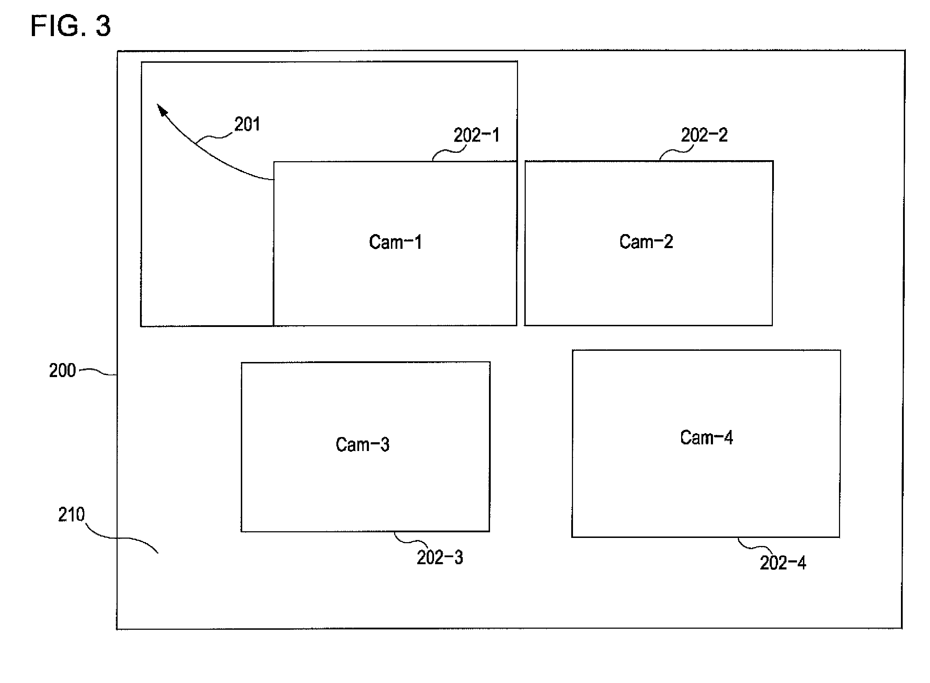

Fig. 3 is a diagram illustrating an example of a screen displayed when the image display application 200 operates. Here, four cameras Cam-1 to Cam-4 are used for simplicity.

Images received from the memory of the recorder 20 or received through the network 10 are displayed in image display regions 202-1 to 202-4. The image display regions 202-1 to 202-4 may be arranged any positions in a layout window 210. That is, the image display regions 202-1 to 202-4 may be arbitrarily moved in the layout window 210 and may be resized. In the example shown in Fig. 3, the image display region 202-1 of the camera Cam-1 is subjected to an enlarging operation 201. The enlarging operation 201 is performed by dragging a mouse, for example, used as an information input device 40.

### Definitions of Terms

Before describing an example of this embodiment, terms will be defined as described below.

### "Monitoring Region"

A monitoring region corresponds to a region which is captured by a single camera which is used for monitoring and which is installed in a position determined by a user so that the user sufficiently recognizes objects in the region. That is, the monitoring region is a region which is actually captured by the single camera.

### "Blind Spot"

A blind spot corresponds to a region which is included in a region of an image obtained before a panning operation (horizontal movement), a tilting operation (vertical movement), and a zoom-in operation are performed using the single camera but not included in a region of the image obtained after the panning operation, the tilting operation, and the zoom-in operation are performed using the single camera.

### "Maximum Display Region"

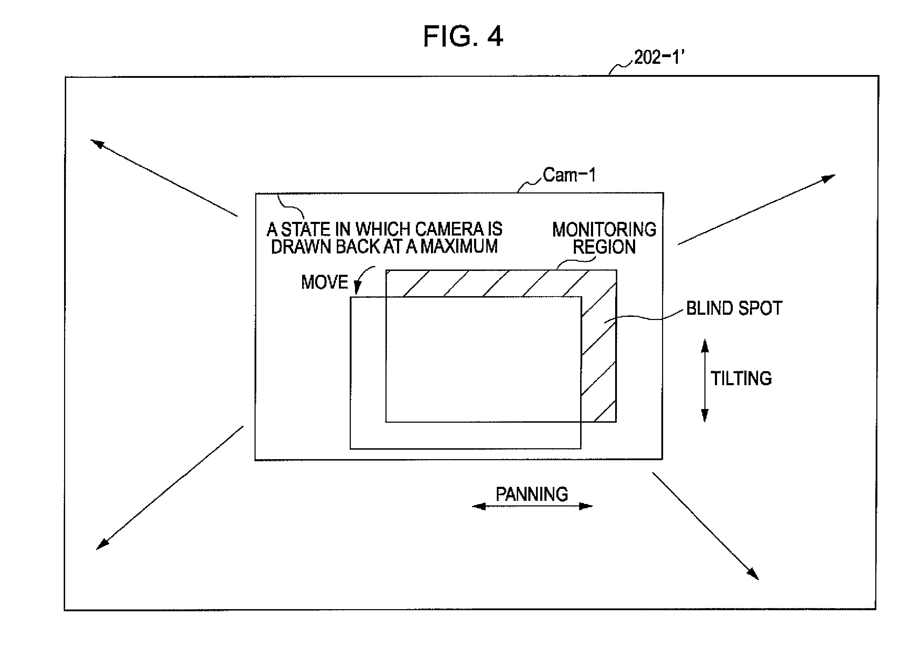

A maximum display region corresponds to a frame representing a region in the image display application 200, which may be subjected to the panning and tilting operations in a state in which the camera is drawn back at a maximum. In the image display application 200, the maximum display region is displayed as information on the image display region. A current image (i.e., the monitoring region) should be displayed in the maximum display region so that a position of the current image is recognizable as shown in Fig. 4.

### "System Monitoring Region"

A system monitoring region corresponds to a region to be monitored by the user so that generation of a blind spot in the layout window is avoided in the system.

### "Blind spot generated region"

A blind spot generated region corresponds to a region which is not captured by any camera or which is captured only by a single camera.

Next, preparation will be described. The preparation is necessary in order to control the cameras without generating a blind spot.

### Preparation in Image Display Application

The image display application 200 performs operations described below according to the embodiment of the present invention.

### (1) The image display application 200 sets the image display regions 202-1 to 202-4 in the layout window 210 in accordance with positions of the cameras Cam-1 to Cam-4.

### 1-0: Initial State

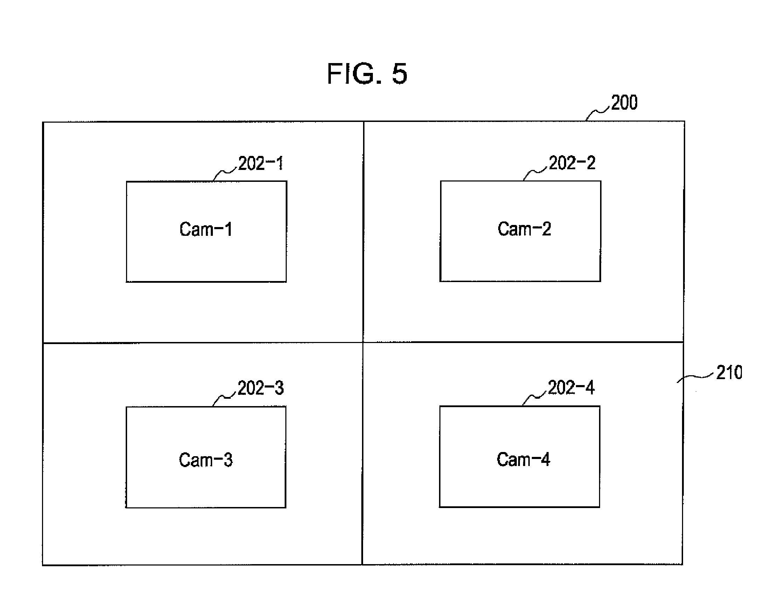

As shown in Fig. 5, images captured by the cameras Cam-1 to Cam-4 are arranged in the image display regions 202-1 to 202-4 in the layout window 210 included in the image display application 200. Note that each of the cameras Cam-1 to Cam-4 is set such that an image located in a center region of a frame of a maximum display region is obtained when the camera is drawn back at a maximum.

### 1-1: Setting of Cameras in accordance with Monitoring Object

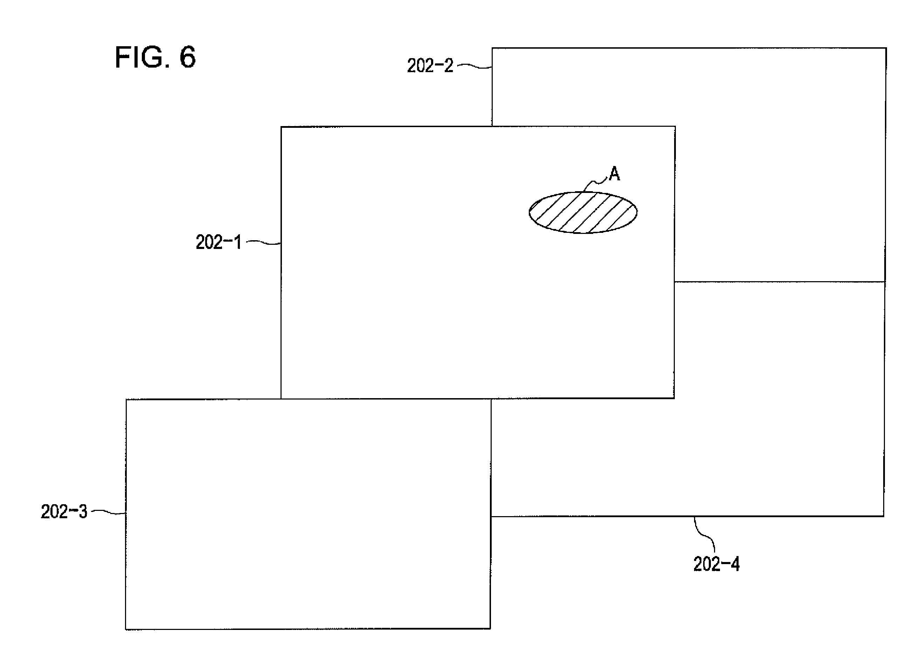

The user views objects to be monitored through the cameras Cam-1 to Cam-4 and controls the cameras Cam-1 to Cam-4 to perform panning operations, tilting operations, and zoom-in operations so that the regions corresponding to the objects to be monitored are captured. That is, the user sets regions to be monitored while seeing the screen. This operation is remotely performed using the camera operation application 100. In this embodiment, it is assumed that regions to be captured by the cameras Cam-1 to Cam-4 are arranged as shown in Fig. 6. That is, a portion of the image display region 202-1 of the camera Cam-1 overlaps with a portion of the image display region 202-2 of the camera Cam-2 and a portion of the image display region 202-4 of the camera Cam-4. In Fig. 6, portions of frames of the image display region 202-2 and the image display region 202-4 which overlap with the image display region 202-1 are omitted for simplicity.

### 1-2: Control of Ratios of Image Display Regions

Frames of the image display regions are controlled so that display ratios of the images in the layout window 210 are controlled so as to correspond to actual ratios. In Fig. 6, at least one of the cameras Cam-1 and Cam-2 is controlled so that an object A included in common in the image display region 202-1 of the camera Cam-1 and the image display region 202-2 of the camera Cam-2 is displayed in the image display region 202-1 and the image display region 202-2 so as to have an identical size. The sizes of identical objects included in a plurality of image display regions should be controlled to be identical. Otherwise, it is difficult to identify a position of an image in which the user is currently viewing in the entire monitoring region under an environment in which a large monitoring region is divided and monitored using a plurality of cameras. That is, otherwise, a blind angle is generated.

### 1-3: Arrangement of Image Display Regions in accordance with Actual Positional Relationship

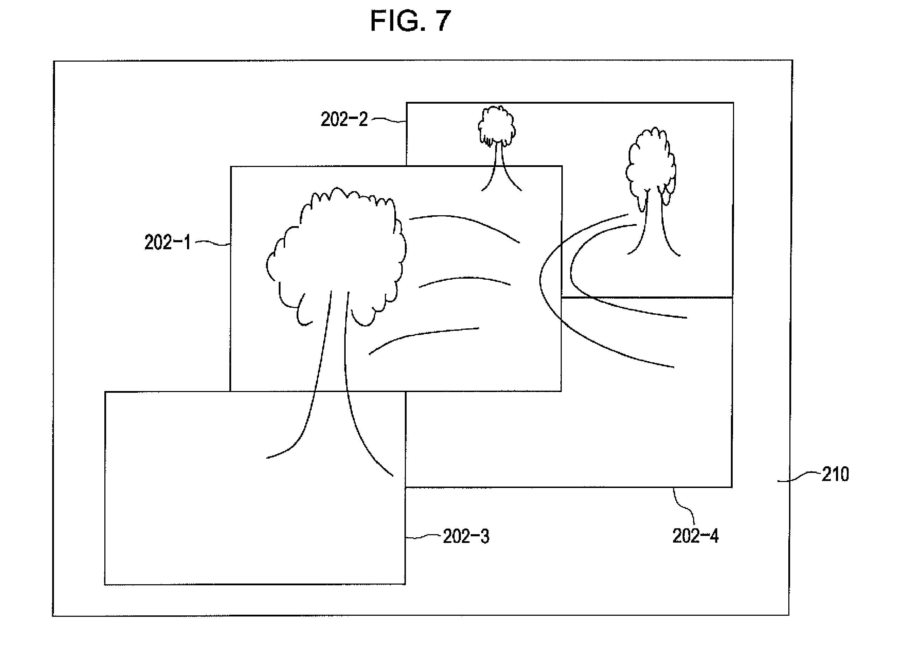

The image display regions 202-1 to 202-4 are arranged in the layout window 210 in accordance with an actual positional relationship. This is performed for, when a large region such as a park is monitored by dividing the region into portions which are captured using a plurality of corresponding cameras, for example, reproducing an actual scene by merging the images captured using the plurality of cameras as shown in Fig. 7.

### 1-4: Positioning of Image Display Layout Window

After the operation of 1-3 is performed in accordance with an user's instruction, a maximum monitoring region 203 is set in the layout window 210 such that a blind spot generated region is minimized. If the blind spot generated region is generated, the blind spot generated region is also displayed.

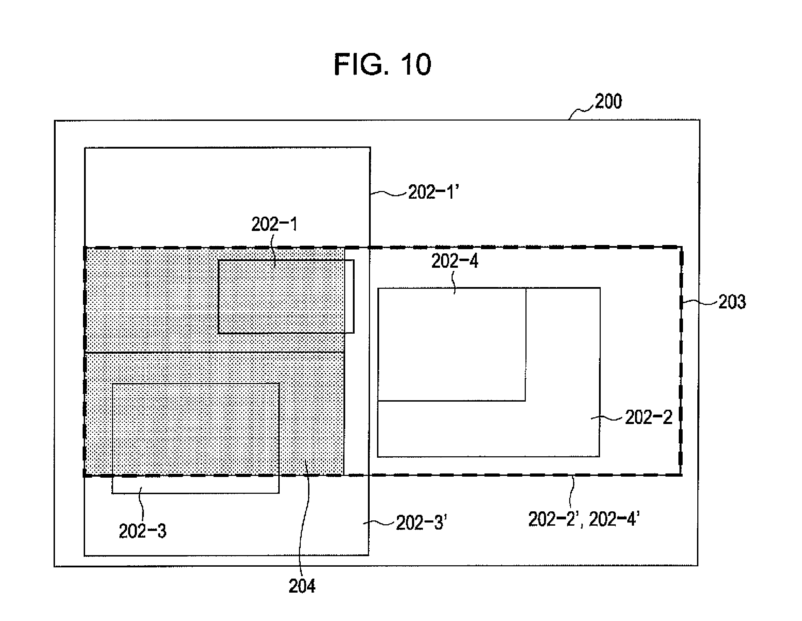

A method for setting the maximum monitoring region 203 will be described using another example. Fig. 10 is a diagram illustrating a state in which a maximum display region 202-2' of the camera Cam-2 overlaps with a maximum display region 202-4' of the camera Cam-4. As shown in Fig. 10, the image display regions 202-1 to 202-4 of the cameras Cam-1 to Cam-4 are set. Here, in the maximum display region 202-1' of the camera Cam-1 and the maximum display region 202-3' of the camera Cam-3, a blind spot generated region 204 does not overlap with any other maximum display region of any other camera. That is, the blind spot generated region 204 is not captured using the other cameras.

Here, when a region which is not included in any maximum display region of any camera is detected in gaps among the maximum display regions 202-1' to 202-4', the region is determined to be a physical blind spot. Therefore, any of the cameras is not capable of monitoring the region, and accordingly, the image display application 200 notifies the user of the fact.

### (2) Setting of Shared Monitoring Regions

Shared monitoring regions are set so that a blind spot is prevented from generating by controlling the cameras. In order to prevent the generation of a blind spot, regions which are captured using the plurality of cameras should overlap with one another. By this, when a certain region is zoomed in using one of the plurality of cameras, a region (that is, the blind spot) which is lost due to the zoom-in operation may be captured using the other remaining cameras. Consequently, the generation of the blind spot is suppressed.

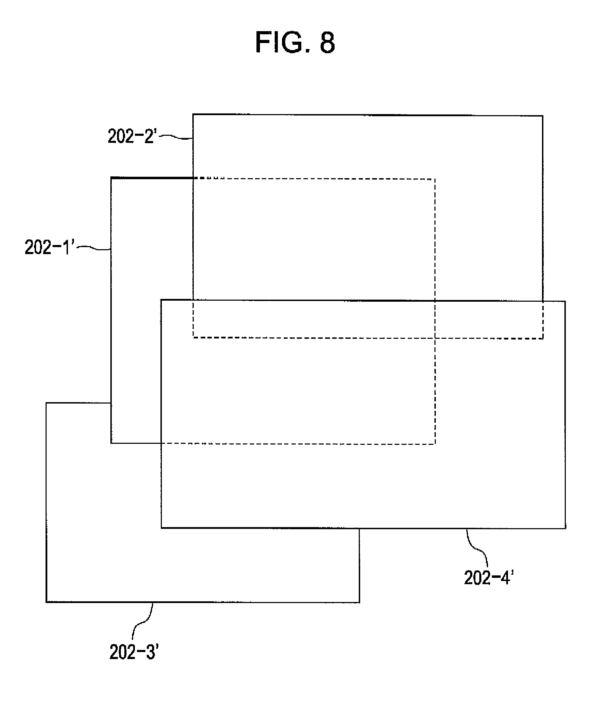

Such a camera control operation is performed using the image display application 200 (shown in Fig. 2). In general, cameras perform panning operations in a horizontal direction and tilting operations in a vertical direction. These operations serve as panning functions and tilting functions performed on the maximum display regions (refer to Figs. 4 and 8, for example) at a time of shooting. Therefore, operations of the cameras are controlled in order to prevent the cameras from performing the panning operations and the tilting operations outside the regions to be monitored. As described above, a region within which the operations (the panning operations and the tilting operations) of cameras are restricted correspond to the system monitoring region.

Setting of the system monitoring region and the shared monitoring regions will be described hereinafter.

### 2-1: Setting of System Monitoring Region

The user manually sets a system monitoring region 207 in the maximum monitoring region 203. The system monitoring region 207 is set by a rubber band operation by dragging the mouse, for example, which serves as the information input device 40. The system monitoring region 207 may include the blind spot generated region 204. In this case, the cameras are controlled not to capture the blind spot generated region 204. As with the image display region 202, the system monitoring region 207 may be resized and moved.

Furthermore, a shape of the system monitoring region 207 may be set as a polygonal shape by adding and deleting points in a set rectangular region corresponding to the system monitoring region 207 so that positions of vertices of the system monitoring region 207 are set. The system monitoring region 207 may have a circular shape by setting an inscribed circle of a rectangular region.

### 2-2: Setting of Shared Monitoring Regions

Shared monitoring regions 205 are set as rectangular regions hereinafter. However, the shared monitoring regions 205 may be set as polygonal regions by clicking portions in the screen using the mouse, for example, so that a plurality of points are set and by connecting the plurality of points. Alternatively, the shared monitoring regions 205 may be set by rubber band operations by dragging the mouse, for example, in the maximum monitoring region 203.

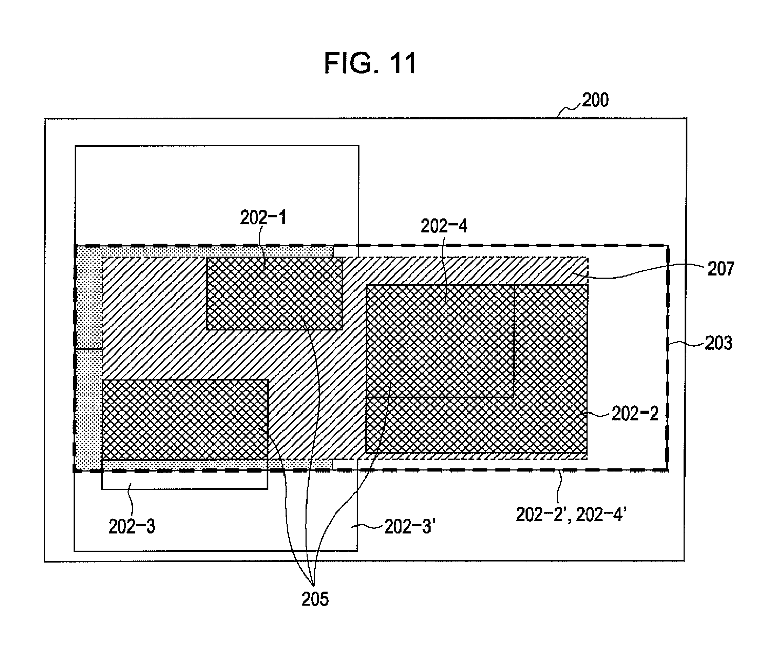

The image display application 200 sets portions in which the system monitoring region 207 which is set by the user overlaps with the image display regions 202-1 to 202-4 as the shared monitoring regions 205 as shown in Fig. 11. This setting operation is automatically performed when the system monitoring region 207 is set.

### Method for Controlling Cameras

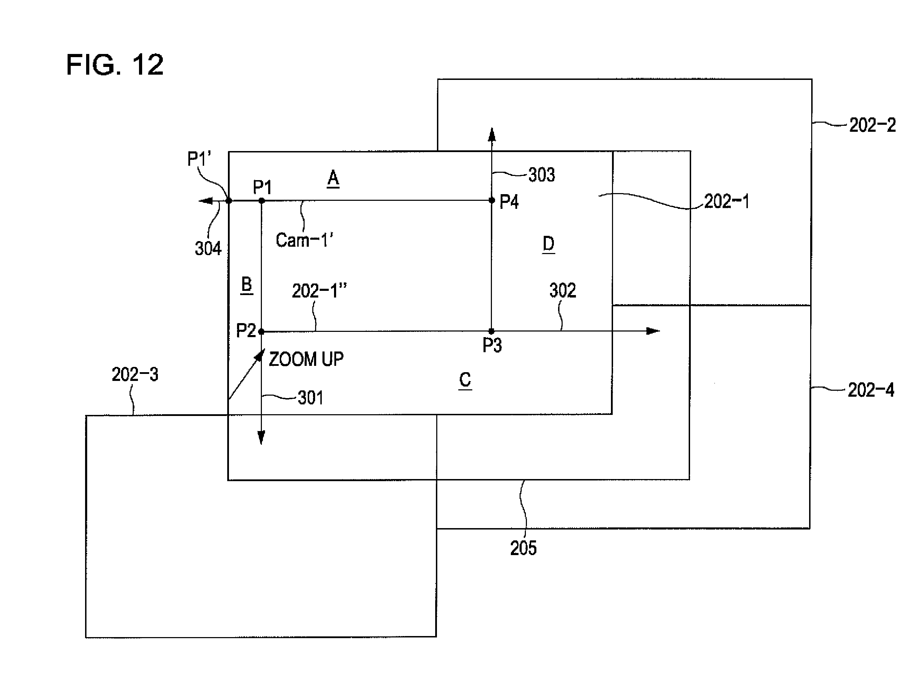

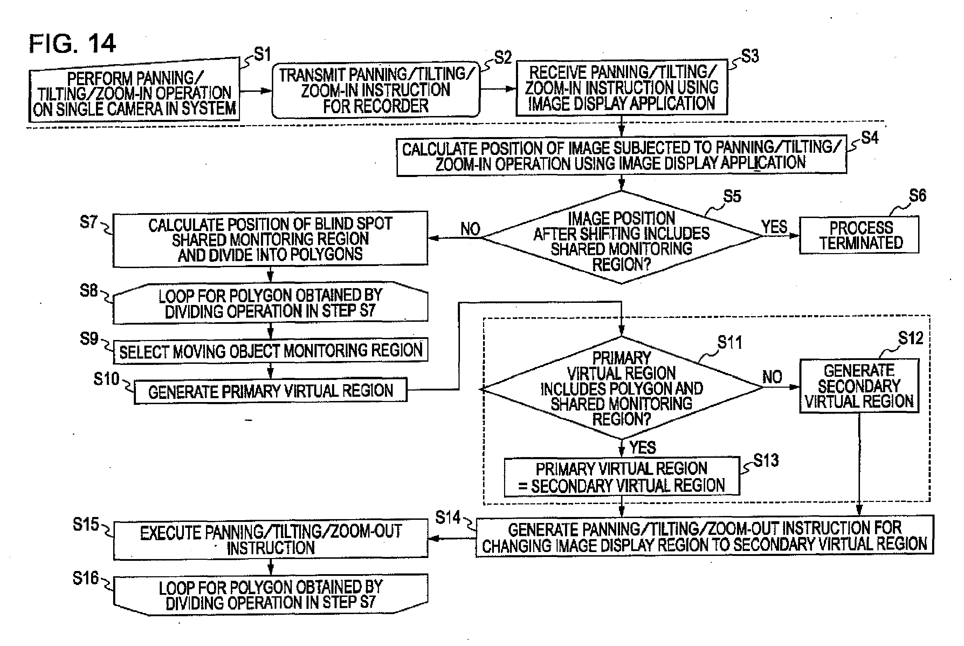

A method for controlling each of the cameras Cam-1 Cam-4 will be described with reference to a flowchart shown in Fig. 14. The image display regions 202-1 to 202-4 of the cameras Cam-1 to Cam-4 are arranged as shown in Fig. 12. Here, only the image display regions 202-1 to 202-4 are shown in Fig. 12. It is assumed that the camera Cam-1 performs a zoom-in operation in order to monitor a certain region as shown in Fig. 12. Note that the image display region 202-1 obtained after the camera Cam-1 performs the zoom-in operation is referred to as a post-movement monitoring region 202-1".

In order to operate the camera Cam-1 as described above, in step S1, the user instructs the camera Cam-1 to perform a panning operation, a tilting operation, and a zoom-in operation. In step S2, a panning instruction, a tilting instruction, and a zoom-in instruction are supplied to the image display application 200 included in the recorder 20. In step S3, the image display application 200 receives the instructions of the operations.

In step S4, a position of an image, which is received from the camera Cam-1 and which is subjected to the process in step S1, in the image display application 200 is calculated. Note that a region obtained before the camera Cam-1 performs the panning, tilting, and zoom-in operations is referred to as a pre-movement monitoring region.

In step S5, it is determined whether the post-movement monitoring region 202-1" includes an entire shared monitoring region 205 of the pre-movement monitoring region.

When the determination is affirmative in step S5, the other remaining cameras are not necessary to perform panning, tilting, and zoom-in operations, and the process is terminated in step S6.

When the determination is negative in step S5, positions of portions of the shared monitoring region 205 which are not included in the post-movement monitoring region 202-1" in the image display application 200 are calculated. The portions of the shared monitoring region 205 which are not included in the post-movement monitoring region 202-1" are referred to as blind-spot shared monitoring regions which correspond to rectangular regions denoted by reference characters A to D in Fig. 12. The blind-spot shared monitoring regions are defined by extended lines 301 to 304 which are extended from respective sides of the post-movement monitoring region 202-1" in step S7. The extended lines 301 to 304 extend from respective vertices P1 to P4.

Processes described below are performed on the rectangular regions (blind-spot shared monitoring regions A to D) which are defied in step S7. In Fig. 14, processes from step S8 to step S16 are performed for individual rectangular regions. This operation will be described with reference to Figs. 12 to 14 hereinafter.

First, one of the image display regions which is located close to one of the sides of the post-movement monitoring region 202-1" which contacts to the rectangular region A to be processed is selected in step S9. (If some of the image display regions correspond to such a region, a region which is nearest the post-movement monitoring region 202-1" is selected from among the image display regions.) This selected region is referred to as a moving-object monitoring region hereinafter and one of the cameras corresponding to the moving-object monitoring region is referred to as a moving-object camera.

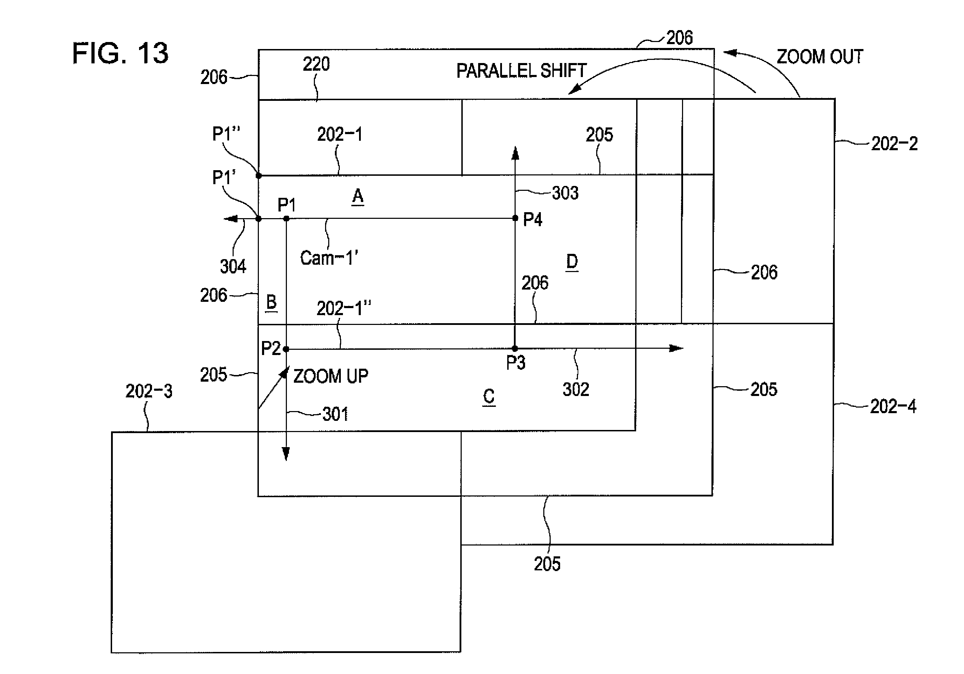

Specifically, in Figs. 12 and 13, after the zoom-in operation of the camera Cam-1, the four blind-spot shared monitoring regions A to D are generated. Taking the rectangular region A as an example, the region located close to one of the sides of the post-movement monitoring region 202-1" which contacts to the rectangular region A corresponds to the image display region 202-2 of the camera Cam-2. Therefore, the moving-object camera corresponds to the camera Cam-2.

Then, in step S10, a primary virtual region is virtually generated by moving the moving-object monitoring region 202-2 of the camera Cam-2 to a certain position so as to contact to one of vertices of the rectangular region A and the shared monitoring regions 205 which is a furthest vertex relative to the moving-object monitoring region 202-2 through panning and tilting operations. Note that the "furthest intersection point" corresponds to a point P1' shown in Figs. 12 and 13. That is, the image display region 202-2 is moved to a certain position so as to contact to the point P1' so that a primary virtual region 220 is generated.

Note that a point P1" is possible to be the "furthest intersection point". In a case as shown in Figs. 12 and 13, the point P1" may be set as the "furthest intersection point". For example, in a case where the rectangular region A has a parallelogram shape, a point the furthest in distance is selected.

Furthermore, since the moving-object monitoring region has sides, the "furthest intersection point" is determined taking a base point (for example, an intermediate point or an end point) included in one of the side which is set for measurement of the furthest intersection point into consideration. The "furthest intersection point" should be determined so that amounts of the panning and tilting in the moving-object monitoring region (the image display region 202-2 of the camera Cam-2) are minimized.

Note that the panning and tilting operations are virtually performed before a zoom-out operation using the moving-object camera Cam-2 due to the following reason. In the monitoring camera system, the user should recognize a position of an image which is currently monitored through the monitoring camera in the image system monitoring region 207. In this case, when the image is changed due to movement caused by the panning and tilting operations, an amount of the movement of the image in accordance with the panning and tilting operations is readily recognized. However, when the zoom-out operation is performed, it is difficult to recognize a region of the image which is currently viewed in the system monitoring region 207. Therefore, the panning and tilting operations are (virtually) performed before the zoom-out operation so that an amount of zoom is minimized.

In step S11, it is determined whether the primary virtual region 220 includes the rectangular region A and the shared monitoring region. When the determination is affirmative in step S11, it is determined that the primary virtual region 220 corresponds to a secondary virtual region in step S13. When the determination is negative in step S11, the primary virtual region 220 is zoomed out so that the primary virtual region 220 contacts to one of the vertices of the shared monitoring region 205 which is the furthest from the vertices of the blind-spot shared monitoring region A to which the primary virtual region 220 contacts, and the obtained region is set as a secondary virtual region 206 in step S12.

Specifically, in Fig. 13, although the rectangular region A is included in the primary virtual region 220, a portion of the shared monitoring region 205 of the camera Cam-1 which overlaps with the image display region 202-2 of the camera Cam-2 is not included. Therefore, a zoom-out operation is performed (on the image display region 202-2) using the camera Cam-2 so that the secondary virtual region 206 is generated.

In step S14, a panning instruction, a tilting instruction, and a zoom-out instruction for obtaining the image display region 202-2 of the camera Cam-2 corresponding to the secondary virtual region 206 are generated. In step S15, the camera Cam-2 performs the panning, tilting, and zoom-out operations in accordance with the panning instruction, tilting, and zoom-out instructions.

Even in a case where the system monitoring region 207 has a polygonal shape, these processes are performed on shared monitoring regions defined as regions having polygonal shapes. Accordingly, the above-described processes may be applied. Even in a case where the system monitoring region 207 has a circular shape, when a portion of a circumference is included in the blind-spot shared monitoring region A, a furthest point of the blind-spot shared monitoring region A corresponds to one of points A, B, C, and D which are intersection points of a diameter parallel to the X axis and the circumference and a diameter parallel to the Y axis and the circumference provided that images captured by the cameras and the layout window 201 have rectangular shapes. Accordingly, the same processes may be applied using one of the intersection points A, B, C, and D as the furthest point.

Even when a plurality of cameras perform panning, tilting and zoom-in operations simultaneously, the operations are performed in an order in which instructions of the panning, tilting, and zoom-in operations are received. Accordingly, a blind spot is not generated after an operation is performed for the last one of the panning, tilting, and zoom-in operations.

If the camera reacts slowly and the user intends to control the camera before the process described above are terminated, panning, tilting, and zoom-in operations are prevented from being performed using the recorder 20 by the user until all panning, tilting, and zoom-in operations of the processes described above are terminated.

When a detailed state of a specific region is recognized after performing the panning, tilting, and zoom-in operation and then the user desired to return the state to the initial state, the state is returned to the initial state since the image display application 200 stores the original monitoring regions of the cameras.

As described above, the image display region 202-2 is controlled so that a blind spot is not generated in the region A. Subsequently, the same processes are performed on the regions B to D. In this case, as for the region B, since the image display region 202-2 of the camera Cam-2 is subjected to the zoom-out operation so as to include the secondary virtual region 206, for example, a portion of the region B which overlaps with the secondary virtual region 206 is not a blind spot. Therefore, a portion of the region B which does not overlap with the secondary virtual region 206 is newly set as a blind spot.

### Processing Performed when Camera Tour Function is Set

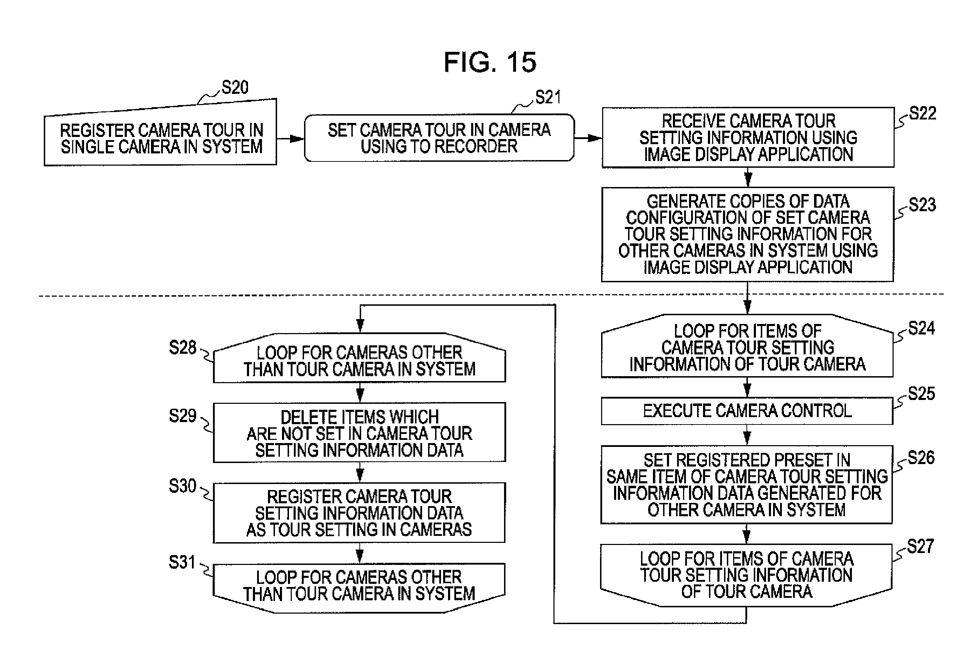

When the user set a tour function in one of the plurality of cameras, a camera tour is automatically generated for the other remaining cameras as described below in accordance with a flowchart shown in Fig. 15. The "camera tour" is a function of automatically displaying images obtained by the cameras in a monitor screen in the monitoring system in a predetermined order. One of the plurality of cameras to which the user set the camera tour function is referred to as a "tour camera".

The user registers the camera tour function in the camera operation application 100 for one of the plurality of cameras in step S20. Then, the recorder 20 sets the camera tour function to the corresponding one of the plurality of cameras in step S21.

The image display application 200 receives camera tour setting information in step S22. In step S23, the image display application 200 generates, for the other remaining cameras, copies of a data configuration of the camera tour setting information which has been set to the tour camera.

The camera tour setting information is constituted by a combination of a preset number, a period of time before moving, and a period of time of stay after moving. Data items which have configuration the same as that of a data item which constitutes the set camera tour function are generated for individual other remaining cameras.

Processes described below are performed on individual items of the camera tour setting information registered in the tour camera.

The camera control operation described above is performed. Note that, the panning, tilting, and zoom-in instructions are not executed, and the generated panning, tilting, and zoom-in instructions are registered as preset items in step S25.

The tour camera including the preset items registered therein changes preset numbers of the remaining other cameras to the registered number in step S26.

The cameras other than the tour camera are subjected to processes described below (step S28). Items which have not been changed in the camera setting information for each camera are deleted in step S29. Arrangement data which is thus-generated camera tour setting information data is set as a camera tour in each of the cameras in step S30.

It should be understood by those skilled in the art that various modifications, combinations, sub-combinations and alterations may occur depending on design requirements and other factors insofar as they are within the scope of the appended claims or the equivalents thereof.

## Claims

1. A camera control method comprising the steps of:
performing at least one of a panning operation, a tilting operation, and a zoom-in operation using a first camera (cam-1) of at least two cameras (cam-1, ..., cam-n); and
performing at least one of a panning operation, a tilting operation, and a zoom-out operation using a second camera (cam-2) of the at least two cameras (cam-1, ..., cam-n) so that a portion of a blind spot or an entire blind spot generated due to at least one of the panning operation, the tilting operation, and the zoom-in operation performed using the first camera (cam-1) is included in a region captured using the second camera (cam-2).

2. The camera control method according to Claim 1, further comprising the step of:
dividing the blind spot generated due to at least one of the panning operation, the tilting operation, and the zoom-in operation performed using the first camera (cam-1).

3. The camera control method according to Claim 1, further comprising the steps of:
generating a primary virtual region by virtually performing at least one of the panning operation and the tilting operation using the second camera (cam-2); and
determining whether the primary virtual region includes the blind spot.

4. The camera control method according to Claim 1,
wherein when the region captured using the second camera (cam-2) includes a portion of the blind spot of the first camera (cam-1), the remaining portion of the blind spot is included in a region captured using another camera or regions captured using a plurality of other cameras.

5. The camera control method according to Claim 1, further comprising the step of:
setting a shared monitoring region which is captured using the first camera (cam-1) and the second camera (cam-2).

6. The camera control method according to Claim 1,
wherein the second camera (cam-2) operates so as to capture the blind spot and the region to be captured using the second camera (cam-2).

7. A camera control program comprising the steps of:
performing at least one of a panning operation, a tilting operation, and a zoom-in operation using a first camera (cam-1) of at least two cameras (cam-1, ..., cam-n); and
performing at least one of a panning operation, a tilting operation, and a zoom-out operation using a second camera (cam-2) of the at least two cameras (cam-1, ..., cam-n) so that a portion of a blind spot or the entire blind spot generated due to at least one of the panning operation, the tilting operation, and the zoom-in operation performed using the first camera (cam-1) is included in a region captured using the second camera (cam-2).

8. A camera control device comprising:
a first controller configured to control a first camera (cam-1) of at least two cameras (cam-1, ..., cam-n) to perform at least one of a panning operation, a tilting operation, and a zoom-in operation; and
a second controller configured to control a second camera (cam-2) of the at least two cameras (cam-1, ..., cam-n) to perform at least one of a panning operation, a tilting operation, and a zoom-out operation so that a portion of a blind spot or the entire blind spot generated due to at least one of the panning operation, the tilting operation, and the zoom-in operation performed using the first camera (cam-1) is included in a region captured using the second camera (cam-2).

9. A camera system comprising:
at least two cameras (cam-1, ..., cam-n) connected to a network;
a display device (30) configured to display images captured using the at least two cameras (cam-1, ..., cam-n);
a camera operation application (100) configured to operate a first camera (cam-1) of the at least two cameras (cam-1, ..., cam-n) in accordance with an operation of a second camera (cam-2);
an image display application (200) configured to display the images captured using the at least two cameras (cam-1, ..., cam-n) and generate an instruction to be transmitted to the camera operation application (100); and
a recorder (20) configured to be connected to the network and include the camera operation application (100) and the image display application (200).
